# FASCICULE DE BREVET EUROPEEN

(11) **EP 3 111 189 B1**
(45) Date de publication et mention de la délivrance du brevet: **11.04.2018**
(21) Numéro de dépôt: 15713204.4
(22) Date de dépôt: 26.02.2015
(51) Int. Cl.: G01M 11/02

(54) **INSTRUMENT OPTIQUE POUR REPÉRER AU MOINS UN POINT CARACTÉRISTIQUE D'UNE LENTILLE OPHTALMIQUE**
OPTISCHES INSTRUMENT ZUR ORTUNG VON MINDESTENS EINEM CHARAKTERISTISCHEN PUNKT EINER OPHTHALMISCHEN LINSE
OPTICAL INSTRUMENT FOR LOCATING AT LEAST ONE CHARACTERISTIC POINT OF AN OPHTHALMIC LENS

(30) Priorité: 27.02.2014 FR 1451615
(43) Date de publication de la demande: 04.01.2017
(73) Titulaire: Essilor International, 94220 Charenton-le-Pont (FR)
(72) Inventeur: ESCALIER, Guilhem, F-94227 Charenton le Pont Cedex (FR)
(74) Mandataire: Santarelli
(86) Numéro de dépôt international: PCT/FR2015/050466
(87) Numéro de publication internationale: WO 2015/128590

(56) Documents cités:
- EP-A1- 1 997 585
- EP-A1- 2 239 552
- US-A1- 2006 192 945
- US-A1- 2007 091 262

## Description

### DOMAINE DE L'INVENTION

L'invention a trait aux instruments optiques pour repérer au moins un point caractéristique d'une lentille ophtalmique.

### ARRIERE-PLAN TECHNOLOGIQUE

On sait que pour procéder au détourage d'une lentille ophtalmique, c'est-à-dire pour tailler les bords de la lentille ophtalmique à la forme de la monture dans laquelle elle doit être mise en place, on doit connaître l'emplacement d'un ou plusieurs point(s) caractéristique(s) de la lentille ophtalmique, par exemple son Point de Référence Prisme (PRP), son point de référence pour la Vision de Loin (VL) ou son point de référence pour la Vision de Près (VP).

Pour connaître l'emplacement du ou des point(s) caractéristiques, on utilise en général des indications mises sur la lentille ophtalmique par son fabricant, par exemple sous la forme de marquages à l'encre et/ou de microgravures.

Il est également possible de repérer le ou les point(s) caractéristique(s) directement à partir des propriétés optiques de la lentille ophtalmique, par exemple avec un frontofocomètre ou avec un instrument optique de déflectométrie selon la méthode de Hartmann ou de Shack-Hartmann dans laquelle on fait passer de la lumière au travers de la lentille ophtalmique et ensuite au travers d'une plaque opaque transpercée de trous à intervalles réguliers puis on analyse la lumière passée au travers de la plaque opaque.

En général, les instruments pour identifier et localiser les indications mises sur la lentille ophtalmique par son fabricant sont distincts des instruments pour repérer le ou les point(s) caractéristique(s) à partir des propriétés optiques de la lentille ophtalmique.

La demande de brevet européen EP 1 997 585 propose un instrument optique prévu pour identifier et localiser des marquages d'une lentille ophtalmique ou pour repérer le centre optique d'une lentille ophtalmique à partir de ses propriétés optiques. L'instrument décrit par ce document comporte :
- un ensemble d'émission et de réception de lumière, comportant un organe de capture d'images et un organe d'affichage relié à l'organe de capture d'images ;
- un rétroréflecteur en deux parties dont l'une, au centre, est fixe, et l'autre, annulaire de même centre, est rotative ;
- un support configuré pour recevoir la lentille ophtalmique entre l'ensemble d'émission et de réception de lumière et le rétroréflecteur, avec l'ensemble d'émission et de réception de lumière, le support et le rétroréflecteur qui sont disposés pour qu'un faisceau de lumière incident issu de l'ensemble d'émission et de réception de lumière traverse la lentille ophtalmique, rencontre le rétroréflecteur, revienne vers la lentille ophtalmique, traverse à nouveau la lentille ophtalmique et revienne à l'ensemble d'émission et de réception de lumière pour atteindre l'organe de capture d'images, lequel est configuré pour fournir à l'organe d'affichage des images pour identifier et de localiser les marquages susceptibles d'être présents sur la lentille ophtalmique ; et
- un ensemble de réception et d'analyse de lumière, dont le sommet est la partie centrale fixe du rétroréflecteur, avec le support et le rétroréflecteur qui sont configurés pour que l'ensemble de réception et d'analyse de lumière reçoive de la lumière du faisceau incident passée au travers de la lentille ophtalmique, au travers de l'ouverture que forme le centre de la partie annulaire du rétroréflecteur et au travers de la partie centrale fixe du rétroréflecteur, l'ensemble de réception et d'analyse de lumière étant configuré pour repérer le centre optique de la lentille ophtalmique à partir de la lumière reçue.

### OBJET DE L'INVENTION

L'invention vise à fournir un instrument optique du même genre mais plus performant.

L'invention propose à cet effet un instrument optique pour repérer au moins un point caractéristique d'une lentille ophtalmique, comportant :
- un ensemble d'émission et de réception de lumière, comportant un organe de capture d'images et un organe d'exploitation d'images relié à l'organe de capture d'images ;
- un organe de retour de lumière ;
- un support configuré pour recevoir ladite lentille ophtalmique entre ledit ensemble d'émission et de réception de lumière et ledit organe de retour de lumière, avec ledit ensemble d'émission et de réception de lumière, ledit support et ledit organe de retour de lumière qui sont disposés pour qu'un faisceau de lumière incident issu dudit ensemble d'émission et de réception de lumière traverse ladite lentille ophtalmique, rencontre ledit organe de retour de lumière, revienne vers ladite lentille ophtalmique, traverse à nouveau ladite lentille ophtalmique et revienne audit ensemble d'émission et de réception de lumière pour atteindre l'organe de capture d'images, lequel est configuré pour fournir à l'organe d'exploitation d'images des images pour identifier et localiser des indications prédéterminées susceptibles d'être présentes sur la lentille ophtalmique pour donner l'emplacement dudit au moins un point caractéristique ;
- une ouverture ménagée dans ledit organe de retour de lumière ; et
- un ensemble de réception et d'analyse de lumière, situé du côté de l'organe de retour de lumière opposé audit support, avec ledit support, ledit organe de retour de lumière et ladite ouverture qui sont configurés pour que ledit ensemble de réception et d'analyse de lumière reçoive de la lumière dudit faisceau incident passée au travers de ladite lentille ophtalmique et au travers de ladite ouverture, ledit ensemble de réception et d'analyse de lumière étant configuré pour repérer ledit au moins un point caractéristique de la lentille ophtalmique à partir de la lumière reçue ;
caractérisé en ce que ladite ouverture et un dispositif d'entraînement cyclique de l'organe de retour de lumière, faisant faire à l'organe de retour de lumière un même mouvement à chaque cycle, sont configurés pour qu'une zone fixe en regard de l'organe de retour de lumière comporte au moins une partie dont chaque lieu, au cours d'un cycle, est par moments au droit de ladite ouverture et par moments au droit d'une partie pleine de l'organe de retour de lumière.

Etant donné que l'organe de retour de lumière fait un même mouvement à chaque cycle, l'organe de retour de lumière revient au même emplacement au bout d'un cycle.

Si le dispositif d'entraînement cyclique translate à va-et-vient l'organe de retour de lumière, le même mouvement effectué à chaque cycle est par exemple un aller-retour d'une certaine longueur le long de la direction prédéterminée.

Si le dispositif d'entraînement cyclique fait tourner l'organe de retour de lumière autour d'un centre de rotation prédéterminé, le même mouvement effectué à chaque cycle est par exemple un aller-retour d'une certaine extension angulaire autour du centre de rotation (mouvement de rotation alternatif) ou un tour complet autour du centre de rotation (mouvement de rotation continue).

On notera que dans l'instrument optique décrit par le document EP 1 997 585, où le rétroréflecteur de lumière est en deux parties dont l'une, au centre, est fixe, et l'autre, annulaire de même centre, effectue un mouvement de rotation continue ; toute zone fixe en regard du rétroréflecteur comporte exclusivement, d'une part, une partie qui est en permanence au droit de l'ouverture que forme le centre de la partie annulaire du rétroréflecteur et, d'autre part, une partie qui est en permanence au droit de la partie annulaire du rétroréflecteur. Il n'y a aucune partie dont chaque lieu, au cours d'un cycle, est par moments au droit de l'ouverture et par moments au droit d'une partie pleine du rétroréflecteur. Les images affichées par l'organe d'affichage présentent une lacune centrale donnée par l'ouverture et cette lacune gêne la visibilité des marquages situés au centre de la lentille ophtalmique (voir en particulier la figure 12 du document EP 1 997 585).

Au contraire, dans l'instrument selon l'invention, ainsi qu'expliqué ci-après, les images prises par le capteur d'image comportent au moins une partie dont la luminosité est intermédiaire entre la luminosité donnée par une partie pleine de l'organe de retour de lumière et la luminosité donnée par l'ouverture.

L'au moins une partie de l'image à luminosité intermédiaire n'est pas sombre et ne forme donc pas une lacune qui gêne l'identification et la localisation des indications prédéterminées susceptibles d'être présentes sur la lentille ophtalmique pour donner l'emplacement dudit au moins un point caractéristique.

L'ouverture de l'organe de retour de lumière peut être ainsi relativement grande, et par conséquent davantage de lumière peut être transmise vers l'ensemble de réception et d'analyse de lumière.

L'instrument optique selon l'invention offre donc tout à la fois une identification et une localisation plus facile des indications prédéterminées susceptibles d'être présentes sur la lentille ophtalmique et de meilleures capacités de transmission de lumière vers l'ensemble de réception et d'analyse de lumière, au bénéfice des capacités d'analyse de cet ensemble.

On va maintenant expliquer pourquoi les images prises par le capteur d'image comportent au moins une partie dont la luminosité est intermédiaire entre la luminosité donnée par une partie pleine de l'organe de retour de lumière et la luminosité donnée par l'ouverture.

Dans la zone fixe, l'au moins une partie dont chaque lieu, au cours d'un cycle, est par moments au droit de l'ouverture et par moments au droit d'une partie pleine de l'organe de retour de lumière, si cette partie est située du côté du support, à tout instant :
- la sous-partie au droit d'une partie pleine de l'organe de retour de lumière est traversée par de la lumière se dirigeant vers l'ensemble d'émission et de réception de lumière, et
- la sous-partie au droit de l'ouverture n'est pas traversée par de la lumière se dirigeant vers l'ensemble d'émission et de réception de lumière, ou en tout cas est traversée par une telle lumière de faible intensité.

Par conséquent, la lumière traversant l'au moins une partie de la zone fixe en direction de l'ensemble d'émission et de réception de lumière a une intensité moyenne intermédiaire entre :
- l'intensité de lumière traversant une partie en permanence au droit d'une partie pleine de l'organe de retour de lumière ; et
- l'intensité de lumière (faible ou nulle) traversant une partie en permanence au droit de l'ouverture de l'organe de retour de lumière.

Du fait que la lumière reçue par le capteur d'images provient de l'organe de retour de lumière, et du fait que le capteur d'images est fixe, les images prises par le capteur d'image comportent, vu l'intensité moyenne de lumière traversant l'au moins une partie de la zone fixe, au moins une partie dont la luminosité est intermédiaire entre la luminosité donnée par une partie pleine de l'organe de retour de lumière et la luminosité donnée par l'ouverture.

Selon des caractéristiques avantageuses, ladite ouverture et ledit dispositif d'entraînement cyclique de l'organe de retour de lumière sont configurés pour que ladite zone fixe en regard de l'organe de retour de lumière ne comporte aucune partie qui, au cours d'un cycle, est en permanence au droit de ladite ouverture.

Ainsi les images prises par le capteur d'images ne présentent aucune lacune donnée par l'ouverture de l'organe de retour de lumière.

Dans un premier mode de réalisation avantageux, le dispositif d'entraînement cyclique de l'organe de retour de lumière est configuré pour faire tourner l'organe de retour de lumière autour d'un centre de rotation prédéterminé ; et ladite ouverture est configurée pour que le centre de rotation (40) de l'organe de retour de lumière soit ailleurs que dans l'ouverture.

Selon des caractéristiques avantageuses de ce premier mode de réalisation :
- ledit organe de retour de lumière est à contour circulaire et ladite ouverture est en forme de secteur angulaire ; ou
- ledit organe de retour de lumière est à contour circulaire et ladite ouverture en forme de spirale.

Dans un deuxième mode de réalisation avantageux, le dispositif d'entraînement cyclique de l'organe de retour de lumière est configuré pour faire tourner l'organe de retour de lumière autour d'un centre de rotation prédéterminé ; et ladite ouverture est configurée pour que le centre de rotation de l'organe de retour de lumière soit dans l'ouverture alors que le contour de l'ouverture est autre qu'axisymétrique autour du centre de rotation.

Dans un troisième mode de réalisation avantageux, le dispositif d'entraînement cyclique de l'organe de retour de lumière est configuré pour translater à va-et-vient l'organe de retour de lumière le long d'une direction prédéterminée.

Selon des caractéristiques avantageuses de ce troisième mode de réalisation, l'organe de retour de lumière est à contour rectangulaire et ladite ouverture en forme de rectangle.

Selon des caractéristiques avantageuses de mise en oeuvre de l'instrument selon l'invention :
- le dispositif d'entraînement cyclique de l'organe de retour de lumière et l'organe de capture d'images que comporte ledit ensemble d'émission et de réception de lumière, sont reliés à un dispositif de commande configuré pour que chaque intervalle de temps pendant lequel l'organe de capture d'images prend une image ait une durée pendant laquelle l'organe de retour de lumière fait un nombre entier de cycle(s) ;
- le dispositif d'entraînement cyclique de l'organe de retour de lumière et une source lumineuse que comporte ledit ensemble d'émission et de réception de lumière, sont reliés à un dispositif de commande configuré pour faire émettre à ladite source lumineuse des flashs ayant chacun une durée pendant laquelle l'organe de retour de lumière fait un nombre entier de cycle(s) ;
- ledit ensemble de réception et d'analyse de lumière comporte un dispositif de mesure de déflection de ladite lumière du faisceau incident passée au travers de ladite lentille ophtalmique et au travers de ladite ouverture ;
- ledit ensemble de réception et d'analyse de lumière comporte une matrice de motifs éclairée par ladite lumière du faisceau incident passée au travers de ladite lentille ophtalmique et au travers de ladite ouverture, un autre organe de capture d'images éclairé par la lumière passée au travers de la matrice de motifs, et un dispositif d'analyse pour analyser les images capturées par ledit autre organe de capture d'images afin de repérer ledit au moins un point caractéristique de la lentille ophtalmique ;
- ledit dispositif d'analyse pour analyser les images capturées par ledit autre organe de capture d'images est relié à un organe d'affichage pour afficher ledit au moins un point caractéristique de la lentille ophtalmique ;
- ledit dispositif d'analyse pour analyser les images capturées par ledit autre organe de capture d'images est relié à un dispositif de positionnement automatique d'un pion de centrage sur ladite lentille ophtalmique ; et/ou
- ledit ensemble de réception et d'analyse de lumière comporte en outre une source lumineuse configurée pour émettre de la lumière qui passe au travers de ladite ouverture et est reçue par ledit ensemble d'émission et de réception de lumière ; et ledit ensemble de réception et d'analyse de lumière comporte un masque présentant des trous formant au moins un motif prédéterminé, trous au travers desquels passe ladite lumière émise par ladite source lumineuse que comporte ledit ensemble de réception et d'analyse de lumière.

### BREVE DESCRIPTION DES DESSINS

L'exposé de l'invention sera maintenant poursuivi par la description détaillée d'exemples de réalisation, donnée ci-après, à titre illustratif et non limitatif, en référence aux dessins annexés. Sur ceux-ci :
- la figure 1 est une vue très schématique montrant un ensemble d'émission et de réception de lumière ainsi qu'un support que comporte un premier mode de réalisation d'un instrument optique utile à l'intelligence de l'invention, avec une lentille ophtalmique présentant des microgravures sur l'une de ses faces, cette lentille ophtalmique étant reçue sur le support dans une position où la face sur laquelle sont présentes les microgravures est en regard de l'ensemble d'émission et de réception de lumière ;
- la figure 2 est une vue très schématique montrant un rétrodiffuseur que comporte cet instrument optique et la lentille ophtalmique reçue sur le support ;
- la figure 3 est une vue très schématique montrant l'ensemble d'émission et de réception de lumière, la lentille ophtalmique et le rétrodiffuseur ainsi que le trajet de la lumière depuis le rétrodiffuseur jusqu'à l'ensemble d'émission et de réception de lumière ;

- la figure 4 est une vue schématique du premier mode de réalisation de l'instrument utile à l'intelligence de l'invention, montrant de façon détaillée l'ensemble d'émission et de réception de lumière ;
- la figure 5 est une vue schématique illustrant certaines caractéristiques géométriques de la source lumineuse ponctuelle et de l'organe de collimation ;
- la figure 6 est un schéma-bloc montrant des éléments connectés à l'organe de capture d'images pour permettre le positionnement automatique d'un pion de centrage sur la lentille ophtalmique ;
- la figure 7 est une vue en plan du rétrodiffuseur ;
- la figure 8 est une vue semblable à la figure 7, mais pour un deuxième mode de réalisation de l'instrument optique selon l'invention ;
- la figure 9 est une vue schématique semblable au bas de la figure 4 mais pour le deuxième mode de réalisation de l'instrument optique selon l'invention ;
- la figure 10 est une vue semblable à la figure 8 mais pour une première variante du deuxième mode de réalisation de l'instrument optique selon l'invention ;
- la figure 11 est une vue semblable à la figure 9 mais plus détaillée et correspondant à la première variante illustrée sur la figure 10 ;
- la figure 12 est une vue semblable aux figures 8 et 10 mais pour une deuxième variante du deuxième mode de réalisation de l'instrument optique selon l'invention ;
- la figure 13 est un schéma-bloc montrant des éléments connectés aux organes de capture d'images du deuxième mode de réalisation de l'instrument optique selon l'invention ;
- la figure 14 est un schéma-bloc montrant des éléments connectés à la source lumineuse dans une version où elle émet des flashs ;
- la figure 15 est une vue semblable aux figures 8, 10 et 12 mais pour une troisième variante du deuxième mode de réalisation de l'instrument optique ;
- la figure 16 montre les différentes parties que comporte une zone fixe en regard du rétrodiffuseur illustré sur la figure 15 ;
- la figure 17 est une vue semblable aux figures 8, 10, 12 et 15, mais pour une quatrième variante du deuxième mode de réalisation de l'instrument optique ;
- la figure 18 est une vue semblable à la figure 17 mais montrant également une autre position prise par le rétrodiffuseur au cours de sa rotation ;
- la figure 19 est une vue semblable à la figure 16 mais pour le rétrodiffuseur de la figure 17 ;
- la figure 20 est une vue semblable à la figure 7 mais pour un troisième mode de réalisation de l'instrument optique, qui est selon l'invention ;
- la figure 21 est une vue semblable à la figure 20 mais montrant simultanément les deux positions extrêmes prises par le rétrodiffuseur au cours d'un va-et-vient ;
- la figure 22 est une vue semblable aux figures 16 et 19, mais pour le rétrodiffuseur de la figure 20 ;
- la figure 23 est une vue schématique en élévation-coupe, montrant le rétrodiffuseur illustré sur les figures 10 et 11 ainsi qu'une source lumineuse configurée pour émettre de la lumière à destination de l'ensemble de réception et d'émission de lumière et un masque présentant des trous au travers desquels passe cette lumière ;
- la figure 24 est une vue en plan montrant une variante du masque illustré sur la figure 23 ; et
- la figure 25 est une vue en plan montrant une variante de l'organisation des trous de la matrice de motifs de l'ensemble de réception et d'analyse de lumière.

### DESCRIPTION DETAILLEE D'EXEMPLES DE REALISATION

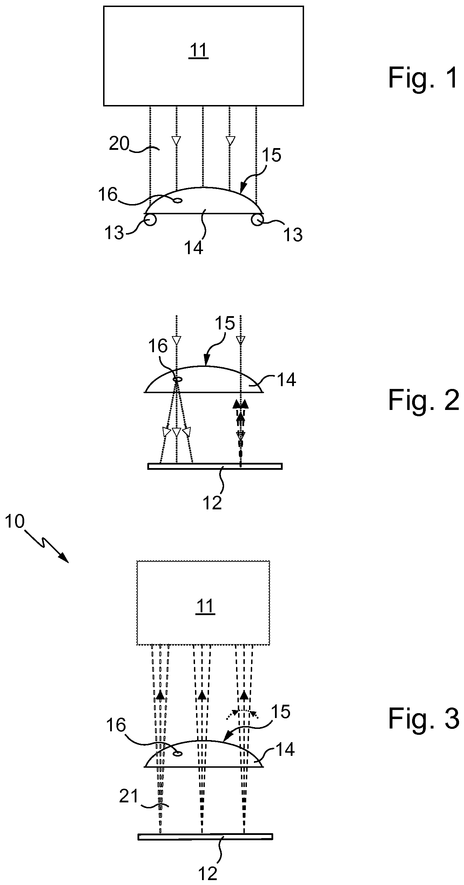

L'instrument optique 10 illustré sur les figures 1 à 7 est conforme à un premier mode de réalisation d'un instrument optique utile à l'intelligence de l'invention.

Cet instrument optique 10 comporte un ensemble 11 d'émission et de réception de lumière, un rétrodiffuseur 12 et un support 13 (figure 1) configuré pour recevoir une lentille ophtalmique 14 entre l'ensemble 11 et le rétrodiffuseur 12 dans une position où sa face 15 sur laquelle sont présentes des microgravures 16 est en regard de l'ensemble 11 d'émission et de réception de lumière.

Les microgravures 16 sont de faibles variations locales d'épaisseur de la lentille ou de faibles variations locales de l'indice optique.

Diverses techniques permettent de rendre présentes sur une face d'une lentille ophtalmique des microgravures 16 : légères surépaisseurs lorsque les microgravures sont moulées avec la lentille ophtalmique, légers creux générés par laser ou altérations du matériau modifiant localement son indice optique.

Lorsqu'un faisceau lumineux cohérent rencontre une microgravure 16, sa phase est modifiée localement par la microgravure.

Cette variation locale de la phase fait diffracter le faisceau lumineux.

Dans le cas d'un faisceau lumineux cohérent spatialement, la diffraction est rendue visible par une modification locale de l'intensité (diffraction de Fresnel).

Les microgravures 16 servent à repérer des points caractéristiques de la lentille ophtalmique 14, par exemple son Point de Référence Prisme (PRP).

L'ensemble 11 d'émission et de réception de lumière émet un faisceau 20 (figure 1) de lumière collimatée cohérente spatialement.

Ainsi que montré sur la gauche de la figure 2, lorsque le faisceau 20 rencontre une microgravure 16, la lumière est diffractée localement.

La projection de la lumière ayant traversé la lentille 14 sur le rétrodiffuseur 12 présente des variations d'intensité dues à la diffraction de la lumière provoquée par les microgravures 16.

L'image du faisceau 20 projetée sur le rétrodiffuseur 12 présente donc des variations d'intensité de formes semblables à celles des microgravures 16.

Ainsi que montré sur la droite de la figure 2, le rétrodiffuseur 12 renvoie la lumière qui lui est parvenue dans la même direction avec une légère diffusion.

Le faisceau lumineux 21 renvoyé par le rétrodiffuseur, du fait de cette légère diffusion, est spatialement incohérent.

Ainsi qu'on le voit sur la figure 3, le faisceau lumineux 21 ainsi émis par le rétrodiffuseur 12 traverse la lentille ophtalmique 14 sans ou quasiment sans modifications dues aux microgravures 16 et parvient à l'ensemble 11 d'émission et de réception de lumière.

Dans la description qui précède, on a omis de mentionner la déviation prismatique que subit le faisceau incident 20 lorsqu'il traverse la lentille et que subit le faisceau 21 émis par le rétrodiffuseur 12 lorsqu'il traverse à nouveau la lentille.

En effet, ces deux déviations prismatiques successives se compensent parfaitement.

Ainsi, alors que l'image des microgravures 16 se formant sur le rétrodiffuseur 12 est déformée par la déviation prismatique, l'image du rétrodiffuseur 12 vue au travers de la lentille ophtalmique 14 par l'ensemble 11 est déformée exactement de façon inverse.

Par conséquent, l'image du rétrodiffuseur 12 vue par l'ensemble 11 contient une représentation exacte des microgravures 16.

Le fait que le faisceau optique traversant la lentille ophtalmique 14 soit collimaté et cohérent spatialement permet d'avoir une projection des microgravures 16 sur le rétrodiffuseur 12 très contrastée.

Le support 13 est positionné pour que la projection des microgravures 16 sur le rétrodiffuseur 12 soit aisée à observer : la distance entre la lentille ophtalmique 14 et le rétrodiffuseur 12 est suffisamment petite pour que la projection sur le rétrodiffuseur 12 reste nette (si la distance est trop grande, du fait de la diffraction au niveau des microgravures 16, l'image serait floue) et suffisamment grande pour que la projection des microgravures 16 ait une taille suffisante pour être observée.

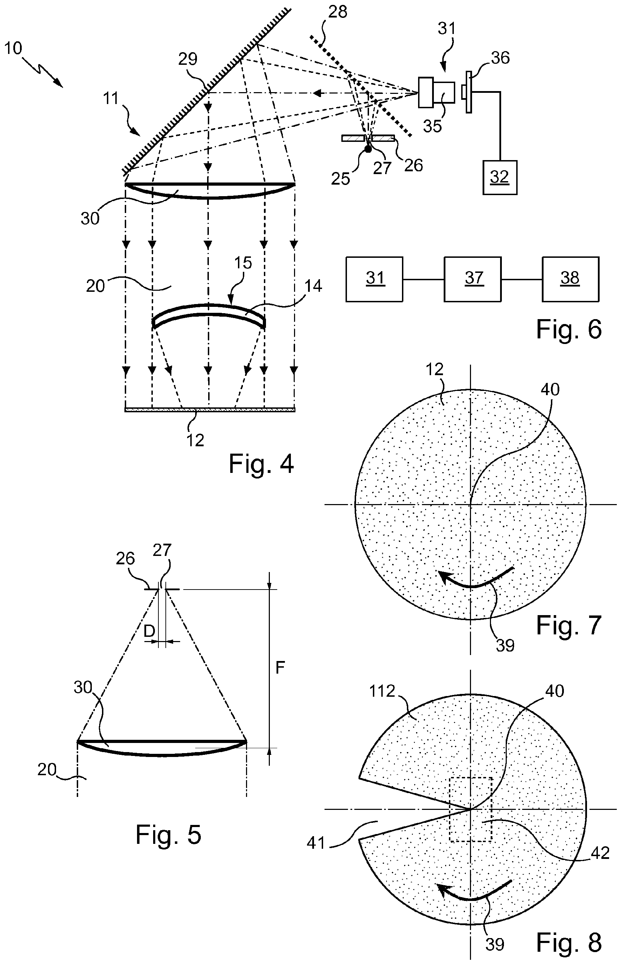

On va maintenant décrire, à l'appui de la figure 4, le détail de l'ensemble 11 d'émission et de réception de lumière.

Dans l'exemple illustré, l'ensemble 11 comporte une source lumineuse étendue 25, un diaphragme 26 à sténopé 27, une lame semi-réfléchissante 28, un miroir de renvoi 29, une lentille de collimation 30, une caméra 31 et un organe d'affichage 32 relié à la caméra 31.

Le diaphragme 26 et l'objectif 35 de la caméra 31 sont situés de part et d'autre de la lame semi-réfléchissante 28, dans des lieux conjugués, c'est-à-dire qu'ils sont vus du côté du miroir de renvoi 29 comme étant situés en un même lieu.

Ce lieu est choisi comme étant le foyer de la lentille de collimation 30. Ainsi, chacun des deux lieux conjugués correspond au foyer de la lentille de collimation 30.

Il peut donc être considéré que le sténopé 27 du diaphragme 26 est disposé à un premier foyer de la lentille de collimation 30 et que l'objectif 35 de la caméra 31 est disposé à un deuxième foyer de la lentille de collimation 30.

La source lumineuse étendue 25 est placée au plus près du diaphragme 26, par exemple à moins de 0,5 mm, de sorte que le sténopé 27 du diaphragme 26 constitue une source lumineuse ponctuelle.

La lumière émise par cette source ponctuelle se réfléchit sur la lame semi-réfléchissante 28 puis sur le miroir de renvoi 29 et traverse la lentille de collimation 30.

Du fait que le sténopé 27 est situé au foyer de la lentille de collimation 30, le faisceau 20 émergeant de la lentille 30 est collimaté, c'est-à-dire que tous ses rayons sont orientés parallèlement les uns aux autres.

Sur la figure 5, on a représenté schématiquement la distance focale F de la lentille de collimation 30 et le diamètre D du sténopé 27, c'est-à-dire le diamètre de la source lumineuse ponctuelle formée par la source lumineuse étendue 25 et par le diaphragme 26.

En pratique, la source lumineuse ponctuelle peut être formée par un composant du marché réunissant une LED formant la source lumineuse étendue 25 et un diaphragme 26.

Pour que le flux lumineux soit suffisant, le diamètre D est d'au moins 10 µm, voire au moins 20 µm. Les valeurs maximales prévues pour le diamètre D sont décrites plus loin.

La lumière du faisceau 21 issu du rétrodiffuseur 12 ayant traversé la lentille ophtalmique 14 traverse ensuite la lentille de collimation 30, est réfléchie par le miroir de renvoi 29, traverse la lame semi-réfléchissante 28 et parvient à l'objectif 35 de la caméra 31.

Cet objectif est mis au point pour que le capteur 36 de la caméra 31 prenne des images du rétrodiffuseur 12.

Ces images s'affichent sur l'organe d'affichage 32 relié à la caméra 31.

Ainsi, un observateur qui regarde l'organe d'affichage 32 voit des images permettant d'identifier et de localiser les microgravures 16 présentes sur la face 15 de la lentille ophtalmique 14.

Cela permet à un opérateur de savoir où sont les microgravures 16 sur la lentille ophtalmique 14 et donc où se trouvent le centre optique et l'axe de puissance sphérique de cette lentille ophtalmique qui lui sont utiles par exemple pour procéder au détourage de la lentille ophtalmique 14, c'est-à-dire pour tailler les bords de la lentille ophtalmique 14 à la forme de la monture dans laquelle elle doit être mise en place.

En pratique, le pion de centrage utilisé pour fixer la lentille ophtalmique 15 à la machine de détourage est posé dans l'instrument 10 grâce à la visualisation des microgravures 16. La pose du pion de centrage peut s'effectuer manuellement par l'opérateur.

La figure 6 montre des éléments permettant la mise en place automatique du pion de centrage.

La caméra 31 est reliée, en outre de l'organe d'affichage 32, à un dispositif 37 d'analyse d'images qui est capable d'identifier et de localiser les microgravures 16. Un dispositif 38 de positionnement automatique d'un pion de centrage est relié au dispositif 37, lequel fournit au dispositif 38 les coordonnées de l'emplacement de la face 15 de la lentille ophtalmique 14 sur lequel doit être posé le pion de centrage.

Le dispositif 38 de positionnement automatique d'un pion de centrage est par exemple tel que décrit dans la demande de brevet français 2 825 466, qui correspond au brevet américain US 6,888,626.

D'une façon générale, il est intéressant que la source lumineuse étendue 25 et donc la source lumineuse ponctuelle qu'elle forme avec le diaphragme 26, présente une longueur d'ondes comprise entre 700 nm et 1000 nm, c'est-à-dire dans l'infrarouge proche de la lumière visible.

Ainsi, l'atténuation de la lumière dans son trajet entre le sténopé 27 et le capteur 36 de la caméra 31 est modérée, y compris lorsque la lentille ophtalmique 14 est teintée.

Bien entendu, le capteur 36 de la caméra 31 est choisi pour être sensible à cette plage de longueurs d'ondes.

D'une façon générale, l'instrument 10 est ici configuré pour des microgravures 16 dont la largeur est comprise entre 10 et 80 µm.

Il est important que l'image des microgravures 16 projetée sur le rétrodiffuseur 12 soit contrastée. Cela permet en effet d'avoir une ouverture de l'objectif 35 de la caméra 31 relativement importante. Une telle ouverture limite les pertes de flux lumineux vers le capteur 36 de la caméra 31.

Ainsi, le flux lumineux reçu par le capteur 36 de la caméra 31 est suffisant pour permettre une observation fluide des microgravures 16, c'est-à-dire que l'utilisateur peut faire bouger la lentille ophtalmique 14 sur le support 13 avec l'organe d'affichage 32 qui se rafraîchit en temps réel (en pratique, à une fréquence au moins égale 15 Hz).

Il a été observé qu'avec la plage de longueurs d'ondes susmentionnée, un diamètre D du sténopé 27 inférieur ou égal à un cinquantième de la distance focale F de la lentille de collimation 30 (distance entre la lentille 30 et son foyer) permet d'obtenir que l'image des microgravures 16 projetée sur le rétrodiffuseur 12 soit contrastée.

On pense que cela provient d'une bonne adéquation entre la largeur de cohérence spatiale du faisceau 20 et la largeur des microgravures 16.

D'une façon générale, vu la limite inférieure de 10 µm mentionnée ci-dessus pour la largeur des microgravures, il est avantageux d'avoir une largeur de cohérence spatiale du faisceau 20 qui soit supérieure ou égale à 5 fois la largeur des microgravures 16.

Par définition, la largeur de cohérence spatiale est égale à Fλ/D, avec λ qui est la longueur d'ondes du flux lumineux.

Si l'on note a la largeur des microgravures, on a la relation : D ≤ Fλ/5a

Par exemple, si :
- la largeur des microgravures est de 50 µm ;
- la longueur d'onde du flux lumineux est de 850 nm; et
- la distance focale de la lentille de collimation 30 est de 200 mm, alors le diamètre D du sténopé 27 est inférieur ou égal à 680 µm.

On a constaté que l'on obtient d'excellents résultats, pour des microgravures 16 ayant une largeur a comprise entre 30 µm et 60 µm, avec la longueur d'onde du flux lumineux λ qui est comprise entre 800 et 900 µm tandis que la distance focale F est comprise entre 150 et 300 mm.

Comme indiqué ci-dessus, avec une longueur d'ondes de la source lumineuse 25 comprise entre 700 nm et 1000 nm, et un diamètre D de la source lumineuse inférieur ou égal à un cinquantième de la distance focale F de la lentille de collimation 30, l'image des microgravures 16 projetée sur le rétrodiffuseur 12 est bien contrastée.

Suivant les circonstances, le diamètre D est sélectionné comme étant inférieure ou égal à un centième, un cent cinquantième, un deux centième ou un deux cent cinquantième de la distance focale F.

On a également constaté que des paramètres favorables à rendre suffisant le flux lumineux reçu par le capteur 36 de la caméra 31 sont :
- une intensité élevée du flux lumineux émis au travers du sténopé 27 du diaphragme 26 ; et/ou
- une ouverture de l'objectif 35 en accord avec l'angle de diffusion de la lumière par le rétrodiffuseur 12 (voir la figure 3 et la partie droite de la figure 2).

Ainsi que montré sur la figure 7 par la flèche 39, pour moyenner la granulosité, le rétrodiffuseur 12 est mis en rotation lors de l'utilisation de l'instrument 10.

Il est également possible de disposer des motifs de calibrage sur le rétrodiffuseur 12 (on rappelle ici que l'objectif 35 de la caméra 31 est mis au point sur le rétrodiffuseur 12 et que c'est donc le rétrodiffuseur 12 que l'on voit, d'ailleurs en l'absence ou en présence d'une lentille ophtalmique 14), de tels motifs de calibrage n'étant plus perceptibles lorsque le rétrodiffuseur est mis en rotation rapide.

On observera que les microgravures telles que 16 sont plus précises que les marquages portés par les lentilles ophtalmiques en provenance de leurs fabricants ; et que l'instrument utile à l'intelligence de l'invention permet d'utiliser directement les microgravures, au bénéfice de la précision.

Une telle précision, par exemple pour le centrage, est importante puisque les verres deviennent de plus en plus personnalisés.

On observera que l'instrument 10 est facilement intégrable dans un instrument déjà existant, par exemple un lecteur-bloqueur ou une meuleuse.

On observera encore qu'une utilisation possible de l'instrument utile à l'intelligence de l'invention est de mesurer un éventuel décalage entre une référence donnée par les microgravures et d'autres repères présents sur le verre par exemple des marquages avec lesquels le verre est livré ; et/ou qu'une autre utilisation possible de l'instrument utile à l'intelligence de l'invention est de faire les marquages très précisément par rapport aux microgravures grâce à une lecture avec l'instrument 10.

Dans le mode de réalisation de l'instrument 10 qui vient d'être décrit, le rétrodiffuseur 12 est formé par un plateau rotatif plein, c'est-à-dire ne présentant aucune ouverture.

On va maintenant décrire à l'appui des figures 8 à 13 un deuxième mode de réalisation de l'instrument optique selon l'invention, dans lequel le rétrodiffuseur 12 est remplacé par un rétrodiffuseur dans lequel est ménagé une ouverture tandis qu'un ensemble de réception et d'analyse de lumière est disposé sous ce rétrodiffuseur, c'est-à-dire du côté du rétrodiffuseur qui est opposé au support 13 prévu pour recevoir la lentille ophtalmique 14.

Le support 13, l'ouverture ménagée dans le rétrodiffuseur et l'ensemble de réception et d'analyse de lumière sont configurés pour que ce dernier reçoive de la lumière du faisceau 20 de lumière collimatée passée au travers de la lentille ophtalmique 14 et au travers de l'ouverture ménagée dans le rétrodiffuseur.

La lumière reçue est analysée pour déterminer certaines données optiques de la lentille ophtalmique 14 utiles pour procéder au détourage de la lentille ophtalmique 14, en particulier le centre optique et l'axe de puissance cylindrique, voire pour déterminer d'autres données telles que la puissance sphérique et la puissance cylindrique.

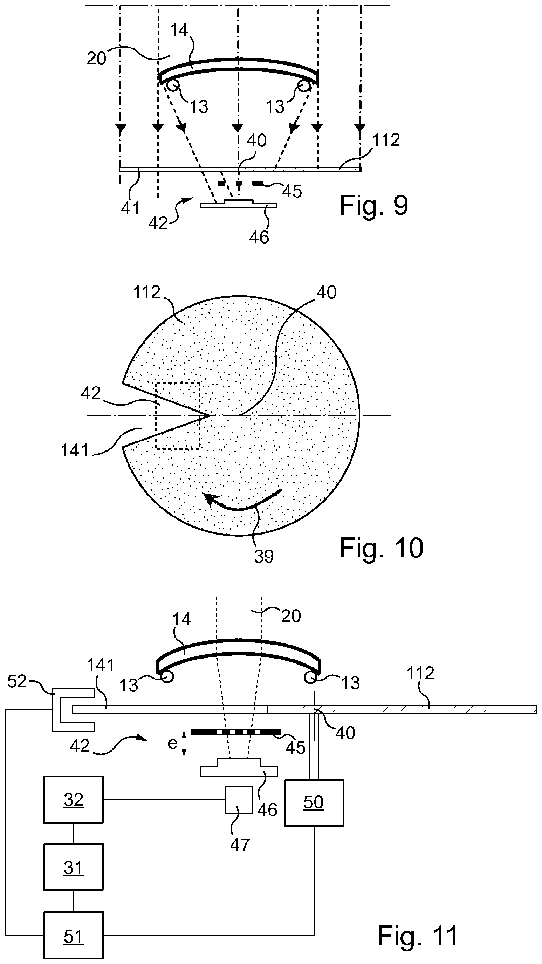

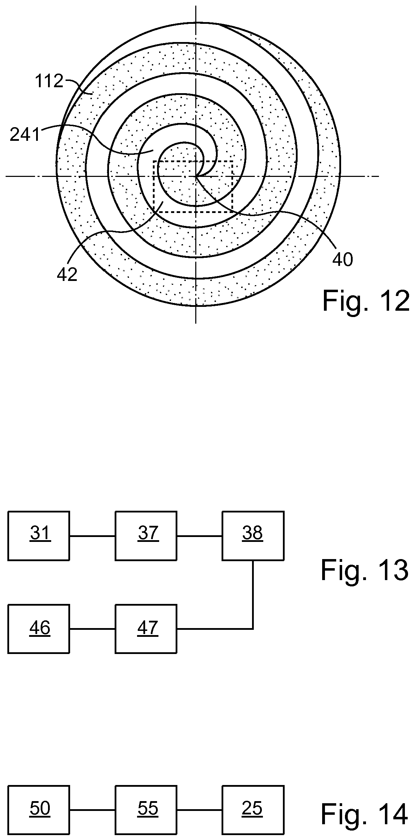

Une première version de l'instrument optique selon le deuxième mode de réalisation est illustrée sur les figures 8 et 9, une deuxième version sur les figures 10 et 11 et une troisième version sur la figure 12.

Des éléments communs aux trois versions sont illustrés sur les figures 11, 13 et 14.

Dans chacune des première, deuxième et troisième versions, le rétrodiffuseur 12 est remplacé par un rétrodiffuseur 112.

De même que le rétrodiffuseur 12, le rétrodiffuseur 112 est à contour circulaire centré sur le centre de rotation 40, mais il présente respectivement une ouverture 41, une ouverture 141 et une ouverture 241.

Dans la première version illustrée sur les figures 8 et 9, l'ouverture 41 est en forme de secteur angulaire. Elle s'étend du centre de rotation 40 jusqu'à la périphérie du rétrodiffuseur 112.

Ainsi qu'on le voit sur la figure 8, l'ensemble 42 de réception et d'analyse de lumière est disposé centré sur le centre de rotation 40.

Ainsi qu'on le voit sur la figure 9, le support 13 pour la lentille ophtalmique 14 est disposé centré vis-à-vis du centre de rotation 40.

De la lumière du faisceau 20 de lumière collimatée passée au travers de la lentille ophtalmique 14 et au travers de l'ouverture 41 parvient sur l'ensemble 42 de réception et d'analyse de lumière.

Ainsi qu'on le comprend au vu de la figure 8, à tout instant une partie de l'ensemble 42 de réception et d'analyse de lumière est au droit de l'ouverture 41.

Ainsi, à tout instant, une portion de l'ensemble 42 de réception et d'analyse de lumière reçoit de la lumière passée par l'ouverture 41.

Du fait du mouvement rotatif du rétrodiffuseur 112, chaque portion de l'ensemble 42 de réception et d'analyse de lumière se trouve à certain moment au droit de l'ouverture 41 lorsque le rétrodiffuseur 112 fait un tour.

Par conséquent, à chaque tour du rétrodiffuseur 112, la totalité de l'ensemble 42 de réception et d'analyse de lumière reçoit de la lumière passée au travers de la lentille ophtalmique 14 et au travers de l'ouverture 41.

Ainsi, à chaque tour du rétrodiffuseur 112, l'ensemble 42 de réception et d'analyse de lumière reçoit de la lumière passée au travers de la totalité de la zone correspondante de la lentille ophtalmique 14.

En analysant la lumière reçue pendant au moins un tour du rétrodiffuseur 112, l'ensemble 42 de réception et d'analyse de lumière est en mesure de déterminer des données optiques de la lentille 14, et plus précisément de la zone par laquelle la lumière est passée avant d'atteindre l'ensemble 42 de réception et d'analyse de lumière.

Du fait que le centre de rotation 40 ne se trouve pas dans l'ouverture 41 (le centre 40 est ici sur le pourtour de l'ouverture 41), il n'existe aucune partie de l'ouverture 41 centrée sur le centre de rotation 40.

Par conséquent, n'importe quel lieu fixe en regard du rétrodiffuseur 112 entre son centre de rotation 41 et sa périphérie, est au droit, pendant une partie de chaque tour, d'une portion du rétrodiffuseur 112 ne faisant pas partie de l'ouverture 41, c'est-à-dire d'une partie pleine.

Ici, où l'ouverture 41 est en forme de secteur angulaire ayant son sommet sur le centre de rotation 40 et une ouverture angulaire de 30°, chaque lieu fixe est au droit de l'ouverture 41 pendant 1/12 (30/360) de tour et par conséquent au droit d'une portion du rétrodiffuseur 112 ne faisant pas partie de l'ouverture 41 pendant 11/12 de tour.

Les images du rétrodiffuseur 112 affichées par l'organe d'affichage 32 ne présentent donc pas de lacune correspondant à l'ouverture 41 et permettent donc de voir la totalité des microgravures 16.

On va décrire ultérieurement, à l'appui de la figure 11 et à l'appui de la figure 14, des mesures qui permettent de ne pas faire apparaître du tout l'ouverture 41 sur l'organe d'affichage 32.

La deuxième version de l'instrument optique selon le deuxième mode de réalisation illustré sur les figures 9 et 10 est une variante de la première version dans laquelle l'ouverture 41 est remplacée par une ouverture 141 qui est également en forme de secteur angulaire, mais dont le sommet est à l'écart du centre de rotation 40 ; tandis que l'ensemble 42 de réception et d'analyse de lumière est excentré par rapport au centre de rotation 40, et de même pour le support 13 prévu pour recevoir la lentille ophtalmique 14 ; le support 13 et l'ensemble 42 de réception et d'analyse de lumière étant centrés l'un par rapport à l'autre.

De la lumière du faisceau 20 de lumière collimatée passée au travers de la lentille ophtalmique 14 et au travers de l'ouverture 141 parvient sur l'ensemble 42 de réception et d'analyse de lumière.

Ainsi qu'on le comprend au vu de la figure 10, à tout instant une partie de l'ensemble 42 de réception et d'analyse de lumière est au droit de l'ouverture 141.

Ainsi, à tout instant, une portion de l'ensemble 42 de réception et d'analyse de lumière reçoit de la lumière passée par l'ouverture 141.

Du fait du mouvement rotatif du rétrodiffuseur 112, chaque portion de l'ensemble 42 de réception et d'analyse de lumière se trouve à un certain moment au droit de l'ouverture 141 lorsque le rétrodiffuseur 112 fait un tour.

Par conséquent, à chaque tour du rétrodiffuseur 112, la totalité de l'ensemble 42 de réception et d'analyse de lumière reçoit de la lumière passée au travers de la lentille ophtalmique 14 et au travers de l'ouverture 141.

Ainsi, à chaque tour du rétrodiffuseur 112, l'ensemble 42 de réception et d'analyse de lumière reçoit de la lumière passée au travers de la totalité de la zone correspondante de la lentille ophtalmique 14.

Du fait que le centre de rotation 40 ne se trouve pas dans l'ouverture 141, il n'existe aucune partie de l'ouverture 141 centrée sur le centre de rotation 40.

Pour les mêmes raisons que celles expliquées ci-dessus pour l'ouverture 41, les images du rétrodiffuseur 112 présentant l'ouverture 141 affichées par l'organe d'affichage 32 ne présentent pas de lacune correspondant à l'ouverture 141 et permettent donc de voir la totalité des microgravures 16 de la lentille ophtalmique 14.

La troisième version de l'instrument optique selon le deuxième mode de réalisation, illustrée sur la figure 12 est une variante de la première version dans laquelle l'ouverture 41 est remplacée par une ouverture 241 qui est en forme de spirale ; tandis que l'ensemble 42 de réception et d'analyse de lumière est excentré par rapport au centre de rotation 40, et de même pour le support 13 prévu pour recevoir la lentille ophtalmique 14 ; le support 13 et l'ensemble 42 de réception et d'analyse de lumière étant centrés l'un par rapport à l'autre.

De la lumière du faisceau 20 de lumière collimatée passée au travers de la lentille ophtalmique 14 et au travers de l'ouverture 241 parvient sur l'ensemble 42 de réception et d'analyse de lumière.

Ainsi qu'on le comprend au vu de la figure 12, à tout instant une partie de l'ensemble 42 de réception et d'analyse de lumière est au droit de l'ouverture 241.

Ainsi, à tout instant, une portion de l'ensemble 42 de réception et d'analyse de lumière reçoit de la lumière passée par l'ouverture 241.

Du fait du mouvement rotatif du rétrodiffuseur 112, chaque portion de l'ensemble 42 de réception et d'analyse de lumière se trouve à un certain moment au droit de l'ouverture 241 lorsque le rétrodiffuseur 112 fait un tour.

Par conséquent, à chaque tour du rétrodiffuseur 112, la totalité de l'ensemble 42 de réception et d'analyse de lumière reçoit de la lumière passée au travers de la lentille ophtalmique 14 et au travers de l'ouverture 241.

Ainsi, à chaque tour du rétrodiffuseur 112, l'ensemble 42 de réception et d'analyse de lumière reçoit de la lumière passée au travers de la totalité de la zone correspondante de la lentille ophtalmique 14.

Du fait que le centre de rotation 40 ne se trouve pas dans l'ouverture 241, il n'existe aucune partie de l'ouverture 141 centrée sur le centre de rotation 40.

Pour les mêmes raisons que celles expliquées ci-dessus pour l'ouverture 41, les images du rétrodiffuseur 112 présentant l'ouverture 241 affichées par l'organe d'affichage 32 ne présentent pas de lacune correspondant à l'ouverture 241 et permettent donc de voir la totalité des microgravures 16 de la lentille ophtalmique 14.

Comme on le voit sur les figures 9 et 11, l'ensemble 42 de réception et d'analyse de lumière comporte une matrice de Hartmann 45 et un capteur d'images 46 disposé à une distance prédéterminée e (figure 11) de la matrice de Hartmann 45.

La matrice de Hartmann 45 est une plaque opaque transpercée de trous à intervalles réguliers, de sorte que l'image capturée par le capteur 46 est une matrice de points lumineux correspondant chacun à un trou de la matrice 45, les emplacements de ces points lumineux dépendant des caractéristiques optiques de la lentille ophtalmique 14.

L'analyse de l'image capturée par le capteur d'images 46 permet donc, par exemple par la méthode de déflectométrie de Hartmann ou de Shack-Hartmann, de connaitre les caractéristiques optiques de la lentille ophtalmique 14, notamment son centre optique, l'axe de sa puissance cylindrique, sa puissance sphérique, sa puissance cylindrique et d'autres caractéristiques. Pour plus détails, on pourra se reporter par exemple à la demande de brevet français 2 825 466 qui correspond au brevet américain US 6,888,626 ; ou à la demande internationale WO 95/34800.

Comme on le voit sur la figure 11, le capteur d'images 46 est relié à un dispositif 47 d'analyse d'images qui est capable de déterminer les caractéristiques optiques de la lentille ophtalmique 14.

Le dispositif 47 d'analyse d'images est relié à l'organe d'affichage 32, lequel peut ainsi afficher les caractéristiques optiques de la lentille ophtalmique 14 déterminées par le dispositif d'analyse d'images 47.

Ainsi que montré sur la figure 13, dans le deuxième mode de réalisation de l'instrument optique selon l'invention, le dispositif 38 de positionnement d'un pion de centrage est relié non seulement au dispositif d'analyse d'images 37, mais aussi au dispositif d'analyse d'images 47, ce qui fait que le dispositif 38 de positionnement automatique d'un pion de centrage peut connaître les coordonnées de l'emplacement de la face 15 de la lentille ophtalmique 14 sur lequel doit être posé le pion de centrage non seulement par les microgravures 16 mais aussi par les caractéristiques optiques de la lentille 14.

Sur la figure 11, on a représenté schématiquement le dispositif 50 d'entraînement en rotation du rétrodiffuseur 122 qui est configuré pour faire tourner le rétrodiffuseur 122 autour du centre de rotation 40.

On va maintenant expliquer, à l'appui de la figure 11, comment l'on peut éviter de faire apparaître sur l'organe d'affichage 32 une lacune correspondant à l'ouverture telle que 41, 141 ou 241.

La caméra 31 et le dispositif 50 d'entraînement en rotation du rétrodiffuseur 112 sont reliés à un dispositif de commande 51 configuré pour que chaque intervalle de temps pendant lequel la caméra 31 prend une image corresponde à un nombre entier de tour(s) du rétrodiffuseur 112.

Dans l'exemple illustré, chaque image est prise pendant 1/20 s et le rétrodiffuseur 112 fait un tour en 1/20 s soit une vitesse de 1200 tours/mn.

Comme expliqué ci-dessus, du fait que le centre de rotation 40 ne se trouve pas dans l'ouverture telle que 41, 141 ou 241, il n'existe aucune partie de ces ouvertures centrée sur le centre de rotation 40.

Par conséquent, n'importe quel lieu fixe en regard du rétrodiffuseur 112 entre son centre de rotation 40 et sa périphérie est au droit, pendant une partie de chaque tour, d'une portion du rétrodiffuseur 112 ne faisant pas partie de l'ouverture (portion pleine).

De même, chaque pixel du capteur 36 de la caméra 31 reçoit, pendant une partie de chaque tour, de la lumière d'une portion du rétrodiffuseur 112 ne faisant pas partie de l'ouverture.

Comme chaque image est prise pendant un ou plusieurs tours entiers du rétrodiffuseur 112, chaque pixel reçoit la même proportion de la lumière venant de la portion du rétrodiffuseur 112 ne faisant pas partie de l'ouverture telle que 41, 141 ou 241.

Chaque image prise par la caméra 31 ne comporte donc aucune lacune correspondant à l'ouverture telle que 41, 141 ou 241.

L'opérateur qui regarde l'organe d'affichage 32 perçoit les mêmes images qu'avec le rétrodiffuseur plein 12, si ce n'est que le rétrodiffuseur 112 apparaît moins lumineux, en totalité ou en partie.

Par exemple, pour le rétrodiffuseur 112 ayant l'ouverture 41 montrée sur les figures 8 et 9, la luminosité perçue pour la totalité du rétrodiffuseur 112 est de 11/12 de la luminosité perçue pour le rétrodiffuseur 12, toutes choses égales par ailleurs.

Le rétrodiffuseur 112 ayant l'ouverture 41 montrée sur les figures 8 et 9 est ainsi perçu comme un rétrodiffuseur entièrement plein (de même que le rétrodiffuseur 12) tout en laissant passer de la lumière vers l'organe 42 de réception et d'analyse de lumière.

Pour le rétrodiffuseur 112 ayant l'ouverture 141 montrée sur les figures 10 et 11, une portion centrale, dont le rayon correspond à la distance entre le centre de rotation 40 et le sommet de l'ouverture 141, est perçue avec la même luminosité que le rétrodiffuseur 12 tandis que le reste du rétrodiffuseur 112 et perçu avec une luminosité moindre.

Dans tous les cas, l'image du rétrodiffuseur 112 permet de voir la totalité des microgravures 16.

La mise en oeuvre du dispositif de commande 51 fait par exemple intervenir une base de temps commune pour commander la caméra 31 et le dispositif d'entraînement en rotation 50.

Dans l'exemple illustré sur la figure 11, il est également prévu un détecteur 52 pour connaître la position du rétrodiffuseur 112 et effectuer un asservissement de sa vitesse de rotation.

En variante, ainsi qu'illustré sur la figure 14, plutôt que de prévoir un dispositif de commande tel que 51 pour commander la caméra 31 et le dispositif 50 d'entraînement en rotation du rétrodiffuseur 12, on prévoit un dispositif 55 relié au dispositif 50 d'entraînement en rotation du rétrodiffuseur 112 et à la source lumineuse étendue 25 de la source lumineuse ponctuelle formée par la source lumineuse étendue 25 et par le diaphragme 26.

Le dispositif de commande 55 est configuré pour faire émettre à la source lumineuse 25 des flashs avec chaque intervalle de temps pendant lequel la source lumineuse 25 émet un flash qui correspond à un nombre entier de tour(s) du rétrodiffuseur 112.

Par exemple, si le rétrodiffuseur 112 tourne à une vitesse de 1200 tours/mn, et fait donc un tour en 1/20 s, chaque flash a une durée de 1/20 s ou d'un multiple de 1/20 s.

Aucune lumière n'étant émise entre les flashs, seuls les moments où un flash est émis apparaît sur l'organe d'affichage 32.

Comme chaque moment où une image apparaît sur l'organe d'affichage 32 dure un ou plusieurs tours entiers du rétrodiffuseur 112, chaque image affichée ne comporte aucune lacune correspondant à l'ouverture telle que 41, 141 ou 241.

L'opérateur qui regarde l'organe d'affichage 32 perçoit les mêmes images qu'avec le dispositif de commande tel que 51, si ce n'est que les images ont une luminosité oscillant au rythme des flashs émis par la source lumineuse 25.

La mise en oeuvre du dispositif de commande 55 fait par exemple intervenir une base de temps commune pour commander les flashs de la source lumineuse 25 et le dispositif d'entraînement en rotation 50.

D'une façon générale, une plage de rotation commode pour le rétrodiffuseur 12 ou le rétrodiffuseur 112 est entre 600 et 5000 tours/mn.

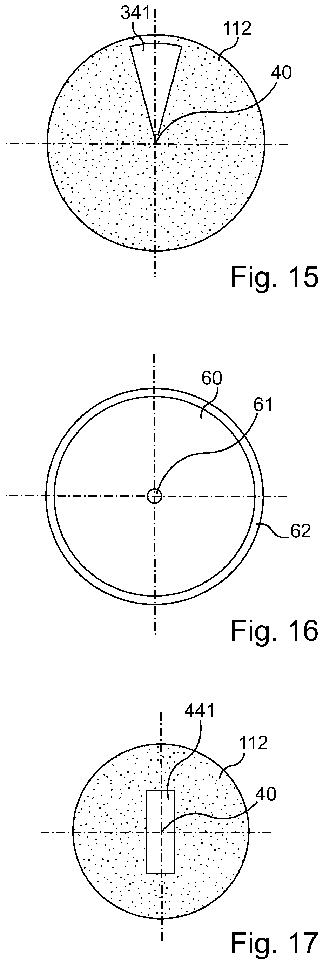

La quatrième version de l'instrument optique selon le deuxième mode de réalisation, illustrée sur la figure 15, est une variante de la deuxième version (figures 10 et 11) dans laquelle l'ouverture 141 est remplacée par une ouverture 341 n'allant pas jusqu'à la périphérie du rétrodiffuseur 112.

Plus précisément, l'ouverture 341 est en forme de secteur angulaire dont le sommet est à l'écart du centre de rotation 40 et dont le côté en arc de cercle est à l'écart de la périphérie du rétrodiffuseur 112.

La figure 16 montre les différentes parties que comporte une zone fixe en regard du rétrodiffuseur 112.

Il s'agit d'une partie 60 annulaire, d'une partie 61 en forme de disque qui est entourée par la partie 61 et d'une partie 62 annulaire qui entoure la partie 60.

Chaque lieu de la partie 60 se trouve au cours d'un tour du rétrodiffuseur 112, par moment au droit de l'ouverture 341 et par moment au droit d'une partie pleine du rétrodiffuseur 112.

Chaque lieu de la partie 61 et chaque lieu de la partie 62 est en permanence au droit d'une partie pleine du rétrodiffuseur 112.

Le contour en forme de cercle de la partie 61 a un rayon correspondant à l'écart entre le centre de rotation 40 et le sommet de l'ouverture 341.

Le contour interne de la partie 62 a un rayon qui est celui du côté en arc de cercle de l'ouverture 341. Le contour externe de la partie 62 a un rayon qui est celui du rétrodiffuseur 112.

Le contour interne de la partie 60 correspond au contour de la partie 61. Le contour externe de la partie 60 correspond au contour interne de la partie 62.

Si la zone fixe en regard du rétrodiffuseur 112 de la figure 15 est du côté de l'ensemble 42 de réception et d'analyse de lumière :
- ni la partie 61 ni la partie 62 ne sont traversées par de la lumière se dirigeant vers l'ensemble 42 de réception et d'analyse de lumière ; et
- la partie 60 comporte à tout instant une sous-partie au droit d'une partie pleine du rétrodiffuseur 112 et une sous-partie au droit de l'ouverture 341.

La sous-partie au droit d'une partie pleine du rétrodiffuseur 112 n'est pas traversée par de la lumière se dirigeant vers l'ensemble 42 de réception et d'analyse de lumière.

La sous-partie au droit de l'ouverture 341 est traversée par de la lumière se dirigeant vers l'ensemble de réception et d'analyse de lumière 42.

Si l'ensemble 42 de réception et d'analyse de lumière est disposé dans la partie 60, à chaque tour du rétrodiffuseur 112, la totalité de l'ensemble 42 de réception et d'analyse de lumière reçoit de la lumière passée au travers de la lentille ophtalmique 14 et au travers de l'ouverture 341.

Ainsi, à chaque tour du rétrodiffuseur 112, l'ensemble 42 de réception et d'analyse de lumière reçoit de la lumière passée au travers de la totalité de la zone correspondante de la lentille ophtalmique 14.

Si la zone fixe en regard du rétrodiffuseur 112 de la figure 15 est du côté du support 13 :
- la partie 61 et la partie 62 sont traversées en permanence par de la lumière se dirigeant vers l'ensemble 11 d'émission et de réception de lumière ; et
- la partie 60 comporte à tout instant une sous-partie au droit d'une partie pleine du rétrodiffuseur 112 et une sous-partie au droit de l'ouverture 340.

La sous-partie au droit d'une partie pleine du rétrodiffuseur 112 est traversée par de la lumière se dirigeant vers l'ensemble 11 d'émission et de réception de lumière.

La sous-partie au droit de l'ouverture 341 n'est pas traversée par de la lumière se dirigeant vers l'ensemble d'émission et de réception de lumière 11, ou alors par de la lumière de faible intensité.

Les images du rétrodiffuseur 112 prises par le capteur 36 de la caméra 31 ont, en matière de luminosité, le même aspect que la figure 16, avec au centre et en périphérie des zones plus lumineuses correspondant à la partie 61 et à la partie 62 et, entre ces parties, une partie un peu moins lumineuse correspondant à la partie 60.

On observera que pour le rétroviseur 112 ayant l'ouverture 41 (figure 8), il existe uniquement une partie telle que 60 puisque le sommet de l'ouverture 41 est sur le centre de rotation 40 (il n'y a donc pas de partie telle que 61) et puisque l'ouverture 41 va jusqu'au bord du rétrodiffuseur 112 (il n'y a donc pas de partie telle que 62).

De même, pour le rétrodiffuseur 112 ayant l'ouverture 141 (figure 10, il n'y a pas de partie telle que 62 mais uniquement une partie telle que 61 et une partie telle que 60.

La cinquième version de l'instrument optique selon le deuxième mode de réalisation, illustrée sur la figure 17, est une variante de la première version (figure 8) dans laquelle l'ouverture 41 est remplacée par une ouverture 441 en forme de rectangle de même centre que le centre de rotation 40, dont les côtés ne sont pas égaux : les côtés orientés verticalement sur la figure 17 sont plus grands que les côtés orientés horizontalement sur la figure 17.

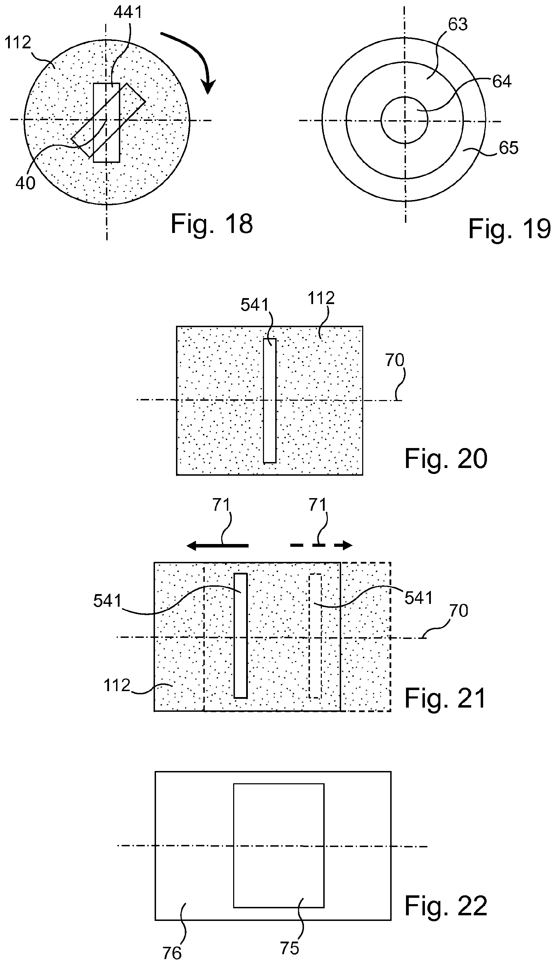

La figure 19 montre les différentes parties que comporte une zone fixe en regard du rétrodiffuseur 112 de la figure 17.

Il s'agit d'une partie 63 annulaire, d'une partie 64 en forme de disque qui est entourée par la partie 63 et d'une partie 65 annulaire qui entoure la partie 63.

Chaque lieu de la partie 63 se trouve au cours d'un tour du rétrodiffuseur 112, par moments au droit de l'ouverture 441 et par moment au droit d'une partie pleine du rétrodiffuseur 112.

Chaque lieu de la partie 64 est en permanence au droit de l'ouverture 441.

Chaque lieu de la partie 65 est en permanence au droit d'une partie pleine du rétrodiffuseur 112.

Comme on le comprend bien au vu de la figure 18, le contour en forme de cercle de la partie 64 a un diamètre qui est la longueur d'un des petits côtés de l'ouverture 441 ; le contour interne de la partie 65 a un diamètre qui est à la diagonale de l'ouverture 441 ; et le contour externe de la partie 65 a un diamètre qui est celui du rétrodiffuseur 112.

On notera que la partie 63 existe parce que l'ouverture 441 n'est pas asymétrique autour du centre de rotation 40.

Vis-à-vis de l'ensemble 42 de réception et d'analyse de lumière et vis-à-vis de l'ensemble 11 d'émission et de réception de lumière, les parties 63 et 65 se comportent comme respectivement la partie 60 et la partie 61 ou 62 de la zone fixe montrée sur la figure 16.

En revanche, comme chaque lieu de la partie 64 est en permanence au droit de l'ouverture 441 :
- si la zone fixe est du côté de l'ensemble 42 de réception et d'analyse de lumière, la partie 64 est traversée en permanence par de la lumière se dirigeant vers l'ensemble 42 de réception et d'analyse de lumière ; et
- si la zone fixe est du côté du support 13, la partie 64 n'est pas traversée par de la lumière se dirigeant vers l'ensemble 11 d'émission et de réception de lumière, ou alors est traversée par de la lumière de faible intensité.

Les images du rétrodiffuseur 112 prise par le capteur 36 de la caméra 31 ont, en matière de luminosité, le même aspect que la figure 19, avec au centre une zone sombre correspondant à la partie 64, une zone plus lumineuse en périphérie correspondant à la partie 65 et, entre ces parties, une zone un peu moins lumineuse correspondant à la partie 63.

D'une façon générale, pour permettre une bonne lecture des microgravures 16, ou d'ailleurs des indications prédéterminées d'une autre nature susceptible d'être présente sur la lentille ophtalmique pour donner l'emplacement d'au moins un point caractéristique, il est souhaitable que la partie telle que 64 soit inexistante ou aussi petite que possible, par exemple pas plus grande que 100 mm².

On notera que la partie 64 est présente parce que le centre de rotation 40 est dans l'ouverture 41.

Dans tous les exemples de réalisation illustrés et décrits ci-dessus, le rétrodiffuseur 112 est rotatif de façon continue autour du centre de rotation 40.

On observera que le dispositif d'entraînement en rotation 50 est un dispositif d'entraînement cyclique, faisant faire au rétrodiffuseur 112 un même mouvement à chaque cycle, c'est-à-dire un tour complet autour du centre de rotation 40.

Dans le troisième mode de réalisation de l'instrument optique illustré sur la figure 20, le rétrodiffuseur 112 entraîné en rotation de façon continue autour du centre de rotation 40 est remplacé par un rétrodiffuseur 112 qui est translaté à va-et-vient le long de la direction 70.

Ce dispositif d'entraînement à va-et-vient est symbolisé sur la figure 21 par les flèches 71.

La figure 21 montre en trait plein l'une des positions extrêmes du mouvement de va-et-vient et, en trait interrompu, l'autre position extrême.

Ici, le rétrodiffuseur 112 a un contour rectangulaire et présente une ouverture 541 qui est de même centre que le rétrodiffuseur 112, et relativement étroite.

La figure 22 montre comme les figures 16 et 19 les différentes parties que comporte une zone fixe en regard du rétrodiffuseur 112 de la figure 20.

Il s'agit d'une partie 75 rectangulaire et d'une partie 76 dont le contour interne correspond à celui de la partie 75 et le contour externe est rectangulaire.

Chaque lieu de la partie 75 se trouve au cours d'un aller-retour du rétrodiffuseur 112, par moment au droit de l'ouverture 541 et par moment au droit d'une partie pleine du rétrodiffuseur 112.

Chaque lieu de la partie 76 est en permanence au droit d'une partie pleine du rétrodiffuseur 112.

Ainsi, la partie 75 se comporte d'une façon semblable à la partie 60 (figure 16) ou à la partie 63 (figure 19) tandis que la partie 76 se comporte d'une façon semblable à la partie 61 ou 62 (figure 16) et à la partie 65 (figure 19).

Dans une variante, non illustrée, le dispositif d'entraînement cyclique du rétrodiffuseur est configuré pour le translater le long d'une direction prédéterminée mais de façon continue plutôt que de façon alternative (à va-et-vient). Par exemple, le rétrodiffuseur est porté par un tapis sans fin tournant autour de plusieurs rouleaux.

Dans une autre variante non illustrée, le rétrodiffuseur est entraîné en rotation mais de façon alternative plutôt que continue, en effectuant des va-et-vient d'une amplitude angulaire prédéterminée.

Dans des variantes non illustrées, le rétrodiffuseur de lumière est remplacé par un organe de lumière d'une autre nature, par exemple un rétroréflecteur.

Dans ce cas, l'objectif tel que 35 de la caméra telle que 31 est mis au point sur la lentille 14 plutôt que sur l'organe de retour de lumière.

Dans des variantes non illustrées, les microgravures 16 sont remplacées par d'autres indications prédéterminées présentes sur la lentille 14 pour donner l'emplacement d'au moins un point caractéristique tel que le Point de Référence Prisme (PRP), par exemple des marquages à l'encre effaçable.

Dans des variantes non illustrées, l'ensemble 11 d'émission et de réception de lumière est différent, avec par exemple avec le faisceau incident 20 qui n'est pas un faisceau de lumière collimaté et/ou la source lumineuse qui est différente de la source ponctuelle formée par la source étendue 25 et par le diaphragme 26, par exemple directement une source lumineuse étendue.

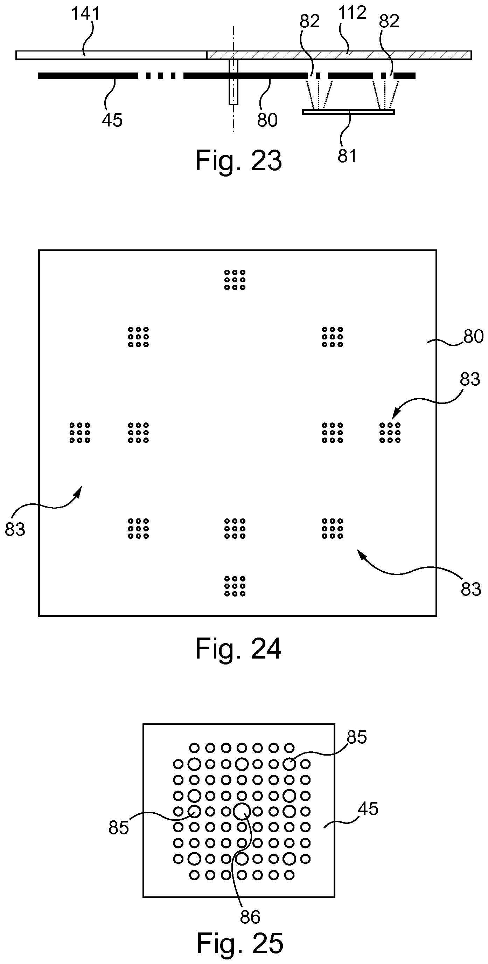

La figure 23 montre une variante de l'ensemble 42 de réception et d'analyse de lumière illustré sur la figure 11 dans lequel la matrice de HARTMANN 45 n'est pas isolée mais fait partie d'un masque 80 plus étendu tandis que l'ensemble 42 comporte également une source lumineuse 81 disposée en regard de trous 82 du masque 80.

La lumière émise par la source lumineuse 81 passe au travers des trous 82, de l'ouverture 141 et se dirige vers l'ensemble 11 d'émission et de réception de lumière où elle est reçue par le capteur 35 de la caméra 31.

Les trous 82 peuvent par exemple former des motifs prédéterminés 83, comme montré sur la figure 24, ici un quadrillage de trois trous par trois trous, servant à effectuer un calibrage de l'instrument optique.

On notera que sur la figure 24, on n'a pas représenté, pour simplifier le dessin, la matrice de HARTMANN 45.

La figure 25 montre une variante de l'organisation des trous de la matrice de HARTMANN 45, dans laquelle certains trous 85 et 86 sont plus gros pour améliorer les capacités d'analyse de la lumière traversant cette matrice de HARTMANN 45.

Dans une variante non illustrée, la matrice de HARTMANN 45 est remplacée par une autre matrice de motifs permettant de déterminer les points caractéristiques de la lentille ophtalmique 14, et plus généralement de déterminer d'autres caractéristiques de cette lentille telle que sa puissance sphérique, sa puissance cylindrique et son axe de puissance cylindrique.

Dans des variantes non illustrées, l'ensemble 42 de réception et d'analyse de lumière est capable de déterminer d'autres caractéristiques optiques, par exemple un axe de polarisation de la lentille 14.

De nombreuses autres variantes sont possibles en fonction des circonstances, et l'on rappelle à cet égard que l'invention ne se limite pas aux exemples décrits et représentés.

## Revendications

1. Instrument optique pour repérer au moins un point caractéristique d'une lentille ophtalmique (14), comportant :
- un ensemble (11) d'émission et de réception de lumière, comportant un organe de capture d'images (35) et un organe d'exploitation d'images (32) relié à l'organe de capture d'images ;
- un organe de retour de lumière ;
- un support (13) configuré pour recevoir ladite lentille ophtalmique (14) entre ledit ensemble (11) d'émission et de réception de lumière et ledit organe de retour de lumière, avec ledit ensemble (11) d'émission et de réception de lumière, ledit support (13) et ledit organe de retour de lumière qui sont disposés pour qu'un faisceau de lumière incident (20) issu dudit ensemble (11) d'émission et de réception de lumière traverse ladite lentille ophtalmique (14), rencontre ledit organe (12) de retour de lumière, revienne vers ladite lentille ophtalmique, traverse à nouveau ladite lentille ophtalmique (14) et revienne audit ensemble (11) d'émission et de réception de lumière pour atteindre l'organe de capture d'images (35), lequel est configuré pour fournir à l'organe d'exploitation d'images (32) des images pour identifier et localiser des indications prédéterminées susceptibles d'être présentes sur la lentille ophtalmique pour donner l'emplacement dudit au moins un point caractéristique ;
- une ouverture ménagée dans ledit organe de retour de lumière ; et
- un ensemble (42) de réception et d'analyse de lumière, situé du côté de l'organe de retour de lumière opposé audit support (13), avec ledit support (13), ledit organe de retour de lumière et ladite ouverture qui sont configurés pour que ledit ensemble (42) de réception et d'analyse de lumière reçoive de la lumière dudit faisceau incident (20) passée au travers de ladite lentille ophtalmique et au travers de ladite ouverture, ledit ensemble (42) de réception et d'analyse de lumière étant configuré pour repérer ledit au moins un point caractéristique de la lentille ophtalmique (14) à partir de la lumière reçue ;
**caractérisé en ce que** ladite ouverture (41 ; 141 ; 241 ; 341 ; 441 ; 541) et un dispositif (50 ; 71) d'entraînement cyclique de l'organe de retour de lumière (112), faisant faire à l'organe de retour de lumière (112) un même mouvement à chaque cycle, sont configurés pour qu'une zone fixe en regard de l'organe de retour de lumière (112) comporte au moins une partie (60 ; 63 ; 75) dont chaque lieu, au cours d'un cycle, est par moments au droit de ladite ouverture (41 ; 141 ; 241 ; 341 ; 441 ; 541) et par moments au droit d'une partie pleine de l'organe de retour de lumière (112).

2. Instrument selon la revendication 1, **caractérisé en ce que** ladite ouverture (41 ; 141 ; 241 ; 341 ; 541) et ledit dispositif (50 ; 71) d'entraînement cyclique de l'organe de retour de lumière (112) sont configurés pour que ladite zone fixe en regard de l'organe de retour de lumière (112) ne comporte aucune partie qui, au cours d'un cycle, est en permanence au droit de ladite ouverture (41 ; 141 ; 241 ; 341 ; 541).

3. Instrument selon l'une quelconque des revendications 1 ou 2, **caractérisé en ce que** le dispositif (50) d'entraînement cyclique de l'organe de retour de lumière (112) est configuré pour faire tourner l'organe de retour de lumière (112) autour d'un centre de rotation prédéterminé (40); et ladite ouverture (41 ; 141 ; 241 ; 341) est configurée pour que le centre de rotation (40) de l'organe de retour de lumière (112) soit ailleurs que dans l'ouverture (41 ; 141 ; 241 ; 341).

4. Instrument selon la revendication 3, **caractérisé en ce que** ledit organe de retour de lumière (112) est à contour circulaire et ladite ouverture (41 ; 141 ; 341) est en forme de secteur angulaire.

5. Instrument selon la revendication 3, **caractérisé en ce que** ledit organe de retour de lumière (112) est à contour circulaire et ladite ouverture (241) en forme de spirale.

6. Instrument selon la revendication 1, **caractérisé en ce que** le dispositif (50) d'entraînement cyclique de l'organe de retour de lumière (112) est configuré pour faire tourner l'organe de retour de lumière (112) autour d'un centre de rotation prédéterminé (40) ; et ladite ouverture (441) est configurée pour que le centre de rotation (40) de l'organe de retour de lumière (112) soit dans l'ouverture (441) alors que le contour de l'ouverture est autre qu'axisymétrique autour du centre de rotation (40).

7. Instrument selon l'une quelconque des revendications 1 ou 2, **caractérisé en ce que** le dispositif (71) d'entraînement cyclique de l'organe de retour de lumière (112) est configuré pour translater à va-et-vient l'organe de retour de lumière le long d'une direction prédéterminée (70).

8. Instrument selon la revendication 7, **caractérisé en ce que** l'organe de retour de lumière (112) est à contour rectangulaire et ladite ouverture (541) en forme de rectangle.

9. Instrument selon l'une quelconque des revendications 1 à 8, **caractérisé en ce que** le dispositif (50) d'entraînement cyclique de l'organe de retour de lumière (112) et l'organe de capture d'images (31) que comporte ledit ensemble (11) d'émission et de réception de lumière, sont reliés à un dispositif de commande (51) configuré pour que chaque intervalle de temps pendant lequel l'organe de capture d'images (31) prend une image ait une durée pendant laquelle l'organe de retour de lumière (112) fait un nombre entier de cycle(s).

10. Instrument selon l'une quelconque des revendications 1 à 8, **caractérisé en ce que** le dispositif (50) d'entraînement cyclique de l'organe de retour de lumière (112) et une source lumineuse (25-27) que comporte ledit ensemble (11) d'émission et de réception de lumière, sont reliés à un dispositif de commande (55) configuré pour faire émettre à ladite source lumineuse (25-27) des flashs ayant chacun une durée pendant laquelle l'organe de retour de lumière (112) fait un nombre entier de cycle(s).

11. Instrument selon l'une quelconque des revendications 1 à 10, **caractérisé en ce que** ledit ensemble (42) de réception et d'analyse de lumière comporte un dispositif (45-47) de mesure de déflection de ladite lumière du faisceau incident (20) passée au travers de ladite lentille ophtalmique (14) et au travers de ladite ouverture (41 ; 141 ; 241 ; 341 ; 441 ; 541).

12. Instrument selon l'une quelconque des revendications 1 à 11, **caractérisé en ce que** ledit ensemble (42) de réception et d'analyse de lumière comporte une matrice de motifs (45) éclairée par ladite lumière du faisceau incident (20) passée au travers de ladite lentille ophtalmique (14) et au travers de ladite ouverture (41 ; 141 ; 241), un autre organe de capture d'images (46) éclairé par la lumière passée au travers de la matrice de motifs (45), et un dispositif d'analyse (47) pour analyser les images capturées par ledit autre organe de capture d'images (46) afin de repérer ledit au moins un point caractéristique de la lentille ophtalmique (14).

13. Instrument selon la revendication 12, **caractérisé en ce que** ledit dispositif d'analyse (47) pour analyser les images capturées par ledit autre organe de capture d'images (46) est relié à un organe d'affichage (32) pour afficher ledit au moins un point caractéristique de la lentille ophtalmique (14).

14. Instrument selon l'une quelconque des revendications 12 ou 13, **caractérisé en ce que** ledit dispositif d'analyse (47) pour analyser les images capturées par ledit autre organe de capture d'images (46) est relié à un dispositif (38) de positionnement automatique d'un pion de centrage sur ladite lentille ophtalmique (14).

15. Instrument selon l'une quelconque des revendications 1 à 14, **caractérisé en ce que** ledit ensemble (42) de réception et d'analyse de lumière comporte en outre une source lumineuse (81) configurée pour émettre de la lumière qui passe au travers de ladite ouverture (41 ; 141 ; 241 ; 341 ; 441 ; 541) et est reçue par ledit ensemble (11) d'émission et de réception de lumière ; et ledit ensemble (42) de réception et d'analyse de lumière comporte un masque (80) présentant des trous (82) formant au moins un motif (83) prédéterminé, trous (82) au travers desquels passe ladite lumière émise par ladite source lumineuse (81) que comporte ledit ensemble (42) de réception et d'analyse de lumière.

## Patentansprüche

1. Optisches Instrument zur Ortung von mindestens einem charakteristischen Punkt einer ophthalmischen Linse (14), umfassend:
- eine Anordnung (11) zum Senden und Empfangen von Licht, umfassend ein Bildaufnahmeelement (35) und ein Bildauswertungselement (32), das mit dem Bildaufnahmeelement verbunden ist;
- ein Lichtrückführelement;
- einen Träger (13), der ausgelegt ist, die ophthalmische Linse (14) zwischen der Anordnung (11) zum Senden und Empfangen von Licht und dem Lichtrückführelement aufzunehmen, mit der Anordnung (11) zum Senden und Empfangen von Licht, dem Träger (13) und dem Lichtrückführelement, die angeordnet sind, damit ein Strahl aus einfallendem Licht (20) aus der Anordnung (11) zum Senden und Empfangen von Licht die ophthalmische Linse (14) durchquert, das Lichtrückführelement (12) trifft, zu der ophthalmischen Linse zurückkehrt, erneut die ophthalmische Linse (14) durchquert und zu der Anordnung (11) zum Senden und Empfangen von Licht zurückkehrt, um das Bildaufnahmeelement (35) zu erreichen, welches ausgelegt ist, Bilder zur Identifizierung und Lokalisierung vorbestimmter Angaben, die auf der ophthalmischen Linse vorhanden sein können, an das Bildauswertungselement (32) zu liefern, um die Stelle des mindestens einen charakteristischen Punkts anzugeben;
- eine Öffnung, die in dem Lichtrückführelement angeordnet ist;
und
- eine Anordnung (42) zum Empfangen und Analysieren von Licht, die auf der Seite des Lichtrückführelements dem Träger (13) gegenüberliegend gelegen ist, mit dem Träger (13), dem Lichtrückführelement und der Öffnung, die derart ausgelegt sind, dass die Anordnung (42) zum Empfangen und Analysieren von Licht Licht des einfallenden Strahls (20) empfängt, das die ophthalmische Linse und die Öffnung durchquert hat, wobei die Anordnung (42) zum Empfangen und Analysieren von Licht ausgelegt ist, den mindestens einen charakteristischen Punkt der ophthalmischen Linse (14) anhand des empfangenen Lichts zu orten;
**dadurch gekennzeichnet, dass** die Öffnung (41; 141; 241; 341; 441; 541) und eine Vorrichtung (50; 71) zum zyklischen Antreiben des Lichtrückführelements (112), die das Lichtrückführelement (112) bei jedem Zyklus in eine selbe Bewegung versetzt, derart ausgelegt sind, dass ein fester Bereich gegenüber des Lichtrückführelements (112) mindestens einen Teil (60 ; 63 ; 75) umfasst, von welchem jede Stelle im Laufe eines Zyklus zeitweise gegenüber der Öffnung (41; 141; 241; 341; 441; 541) und zeitweise gegenüber einem vollen Teil des Lichtrückführelements (112) gelegen ist.

2. Instrument nach Anspruch 1, **dadurch gekennzeichnet, dass** die Öffnung (41; 141; 241; 341; 541) und die Vorrichtung (50; 71) zum zyklischen Antreiben des Lichtrückführelements (112) derart ausgelegt sind, dass der feste Bereich gegenüber des Lichtrückführelements (112) keinen Teil umfasst, der im Laufe eines Zyklus ständig gegenüber der Öffnung (41; 141; 241; 341; 541) gelegen ist.

3. Instrument nach einem der Ansprüche 1 oder 2, **dadurch gekennzeichnet, dass** die Vorrichtung (50) zum zyklischen Antreiben des Lichtrückführelements (112) ausgelegt ist, das Lichtrückführelement (112) um einen vorbestimmten Drehpunkt (40) zu drehen; und die Öffnung (41; 141; 241; 341) derart ausgelegt ist, dass der Drehpunkt (40) des Lichtrückführelements (112) nicht in der Öffnung (41; 141; 241; 341) gelegen ist.

4. Instrument nach Anspruch 3, **dadurch gekennzeichnet, dass** das Lichtrückführelement (112) eine kreisförmige Kontur und die Öffnung (41; 141; 341) die Form eines Winkelabschnitts aufweist.

5. Instrument nach Anspruch 3, **dadurch gekennzeichnet, dass** das Lichtrückführelement (112) eine kreisförmige Kontur und die Öffnung (241) die Form einer Spirale aufweist.

6. Instrument nach Anspruch 1, **dadurch gekennzeichnet, dass** die Vorrichtung (50) zum zyklischen Antreiben des Lichtrückführelements (112) ausgelegt ist, das Lichtrückführelement (112) um einen vorbestimmten Drehpunkt (40) zu drehen; und die Öffnung (441) derart ausgelegt ist, dass der Drehpunkt (40) des Lichtrückführelements (112) in der Öffnung (441) gelegen ist, während die Kontur der Öffnung nicht achsensymmetrisch um den Drehpunkt (40) verläuft.

7. Instrument nach einem der Ansprüche 1 oder 2, **dadurch gekennzeichnet, dass** die Vorrichtung (71) zum zyklischen Antreiben des Lichtrückführelements (112) ausgelegt ist, das Lichtrückführelement entlang einer vorbestimmten Richtung (70) hin und her zu verschieben.

8. Instrument nach Anspruch 7, **dadurch gekennzeichnet, dass** das Lichtrückführelement (112) eine rechteckige Kontur und die Öffnung (541) die Form eines Rechtecks aufweist.

9. Instrument nach einem der Ansprüche 1 bis 8, **dadurch gekennzeichnet, dass** die Vorrichtung (50) zum zyklischen Antreiben des Lichtrückführelements (112) und das Bildaufnahmeelement (31), das die Anordnung (11) zum Senden und Empfangen von Licht umfasst, mit einer Steuervorrichtung (51) verbunden sind, die derart ausgelegt ist, dass jedes Zeitintervall, innerhalb dessen das Bildaufnahmeelement (31) ein Bild aufnimmt, eine Dauer aufweist, während der das Lichtrückführelement (112) eine ganze Anzahl von Zyklus/Zyklen ausführt.

10. Instrument nach einem der Ansprüche 1 bis 8, **dadurch gekennzeichnet, dass** die Vorrichtung (50) zum zyklischen Antreiben des Lichtrückführelements (112) und eine Lichtquelle (25 bis 27), die die Anordnung (11) zum Senden und Empfangen von Licht umfasst, mit einer Steuervorrichtung (55) verbunden sind, die ausgelegt ist, die Lichtquelle (25 bis 27) Blitze abgeben zu lassen, die jeweils eine Dauer aufweisen, während der das Lichtrückführelement (112) eine ganze Anzahl von Zyklus/Zyklen ausführt.

11. Instrument nach einem der Ansprüche 1 bis 10, **dadurch gekennzeichnet, dass** die Anordnung (42) zum Empfangen und Analysieren von Licht eine Vorrichtung (45 bis 47) zum Messen der Ablenkung des Lichts des einfallenden Strahls (20), das die ophthalmische Linse (14) und die Öffnung (41; 141; 241; 341; 441; 541) durchquert hat, umfasst.

12. Instrument nach einem der Ansprüche 1 bis 11, **dadurch gekennzeichnet, dass** die Anordnung (42) zum Empfangen und Analysieren von Licht eine Motivmatrix (45), die von dem Licht des einfallenden Strahls (20), das die ophthalmische Linse (14) und die Öffnung (41; 141; 241) durchquert hat, beleuchtet wird, ein anderes Bildaufnahmeelement (46), das von dem Licht beleuchtet wird, das die Motivmatrix (45) durchquert hat, und eine Analysevorrichtung (47) zum Analysieren der Bilder, die von dem anderen Bildaufnahmeelement (46) aufgenommen wurden, um den mindestens einen charakteristischen Punkt der ophthalmischen Linse (14) zu orten, umfasst.

13. Instrument nach Anspruch 12, **dadurch gekennzeichnet, dass** die Analysevorrichtung (47) zum Analysieren der Bilder, die von dem anderen Bildaufnahmeelement (46) aufgenommen wurden, mit einem Anzeigeelement (32) verbunden ist, um den mindestens einen charakteristischen Punkt der ophthalmischen Linse (14) anzuzeigen.

14. Instrument nach einem der Ansprüche 12 oder 13, **dadurch gekennzeichnet, dass** die Analysevorrichtung (47) zum Analysieren der Bilder, die von dem anderen Bildaufnahmeelement (46) aufgenommen wurden, mit einer Vorrichtung (38) zur automatischen Positionierung eines Zentrierungsstifts auf der ophthalmischen Linse (14) verbunden ist.

15. Instrument nach einem der Ansprüche 1 bis 14, **dadurch gekennzeichnet, dass** die Anordnung (42) zum Empfangen und Analysieren von Licht ferner eine Lichtquelle (81) umfasst, die ausgelegt ist, Licht abzugeben, das die Öffnung (41; 141; 241; 341; 441; 541) durchquert und von der Anordnung (11) zum Senden und Empfangen von Licht empfangen wird; und die Anordnung (42) zum Empfangen und Analysieren von Licht eine Maske (80) umfasst, die Löcher (82) aufweist, die mindestens ein vorbestimmtes Motiv (83) bilden, wobei das Licht, das von der Lichtquelle (81) abgegeben wird, die die Anordnung (42) zum Empfangen und Analysieren von Licht umfasst, die Löcher (82) durchquert.

## Claims

1. Optical instrument for locating at least one characteristic point of an ophthalmic lens (14), comprising:
- a light emission and reception assembly (11), comprising an image capture unit (35) and an image utilization unit (32) linked to the image capture unit;
- a light return unit;
- a support (13) configured to receive said ophthalmic lens (14) between said light emission and reception assembly (11) and said light return unit, with said light emission and reception assembly (11), said support (13) and said light return unit which are disposed so that an incident light beam (20) issuing from said light emission and reception assembly (11) passes through said ophthalmic lens (14), encounters said light return unit (12), returns towards said ophthalmic lens, passes once again through said ophthalmic lens (14) and returns to said light emission and reception assembly (11) so as to reach the image capture unit (35), which is configured to provide the image utilization unit (32) with images so as to identify and locate predetermined indications liable to be present on the ophthalmic lens so as to give the location of said at least one characteristic point;
- an aperture made in said light return unit; and
- a light reception and analysis assembly (42), situated on the side of the light return unit opposite to said support (13), with said support (13), said light return unit and said aperture which are configured so that said light reception and analysis assembly (42) receives light, from said incident beam (20), that has passed through said ophthalmic lens and through said aperture, said light reception and analysis assembly (42) being configured to locate said at least one characteristic point of the ophthalmic lens (14) on the basis of the light received;
**characterized in that** said aperture (41; 141; 241; 341; 441; 541) and a device (50; 71) for cyclic driving of the light return unit (112), making the light return unit (112) make one and the same motion at each cycle, are configured so that a fixed zone facing the light return unit (112) comprises at least one part (60; 63; 75), each site of which, in the course of a cycle, is at times in line with said aperture (41; 141; 241; 341; 441; 541) and at times in line with a solid part of the light return unit (112).

2. Instrument according to Claim 1, **characterized in that** said aperture (41; 141; 241; 341; 541) and said device (50; 71) for cyclic driving of the light return unit (112) are configured so that said fixed zone facing the light return unit (112) does not comprise any part which, in the course of a cycle, is permanently in line with said aperture (41; 141; 241; 341; 541).

3. Instrument according to either one of Claims 1 and 2, **characterized in that** the device (50) for cyclic driving of the light return unit (112) is configured to rotate the light return unit (112) about a predetermined center of rotation (40); and said aperture (41; 141; 241; 341) is configured so that the center of rotation (40) of the light return unit (112) is elsewhere than in the aperture (41; 141; 241; 341).

4. Instrument according to Claim 3, **characterized in that** said light return unit (112) has a circular contour and said aperture (41; 141; 341) is angular-sector-shaped.

5. Instrument according to Claim 3, **characterized in that** said light return unit (112) has a circular contour and said aperture (241) is spiral-shaped.

6. Instrument according to Claim 1, **characterized in that** the device (50) for cyclic driving of the light return unit (112) is configured to rotate the light return unit (112) about a predetermined center of rotation (40); and said aperture (441) is configured so that the center of rotation (40) of the light return unit (112) is in the aperture (441) whilst the contour of the aperture is other than axisymmetric about the center of rotation (40).

7. Instrument according to either one of Claims 1 and 2, **characterized in that** the device (71) for cyclic driving of the light return unit (112) is configured to translate the light return unit to-and-fro along a predetermined direction (70).

8. Instrument according to Claim 7, **characterized in that** the light return unit (112) has rectangular contour and said aperture (541) is rectangle-shaped.

9. Instrument according to any one of Claims 1 to 8, **characterized in that** the device (50) for cyclic driving of the light return unit (112) and the image capture unit (31) comprised by said light emission and reception assembly (11), are linked to a control device (51) configured so that each time interval during which the image capture unit (31) takes an image has a duration for which the light return unit (112) makes an integer number of cycle(s).

10. Instrument according to any one of Claims 1 to 8, **characterized in that** the device (50) for cyclic driving of the light return unit (112) and a light source (25-27) comprised by said light emission and reception assembly (11), are linked to a control device (55) configured to make said light source (25-27) emit flashes each having a duration for which the light return unit (112) makes an integer number of cycle(s).

11. Instrument according to any one of Claims 1 to 10, **characterized in that** said light reception and analysis assembly (42) comprises a device (45-47) for measuring deflection of said light, of the incident beam (20), that has passed through said ophthalmic lens (14) and through said aperture (41; 141; 241; 341; 441; 541).

12. Instrument according to any one of Claims 1 to 11, **characterized in that** said light reception and analysis assembly (42) comprises a matrix of patterns (45) that is illuminated by said light, of the incident beam (20), that has passed through said ophthalmic lens (14) and through said aperture (41; 141; 241), another image capture unit (46) illuminated by the light that has passed through the matrix of patterns (45), and an analysis device (47) for analysing the images captured by said other image capture unit (46) so as to locate said at least one characteristic point of the ophthalmic lens (14).

13. Instrument according to Claim 12, **characterized in that** said analysis device (47) for analysing the images captured by said other image capture unit (46) is linked to a display unit (32) for displaying said at least one characteristic point of the ophthalmic lens (14).

14. Instrument according to either one of Claims 12 and 13, **characterized in that** said analysis device (47) for analysing the images captured by said other image capture unit (46) is linked to a device (38) for automatic positioning of a centering pin on said ophthalmic lens (14).

15. Instrument according to any one of Claims 1 to 14, **characterized in that** said light reception and analysis assembly (42) furthermore comprises a light source (81) configured to emit light which passes through said aperture (41; 141; 241; 341; 441; 541) and is received by said light emission and reception assembly (11); and said light reception and analysis assembly (42) comprises a mask (80) exhibiting holes (82) forming at least one predetermined pattern (83), holes (82) through which said light emitted by said light source (81) comprised by said light reception and analysis assembly (42) passes.
